# EUROPEAN PATENT APPLICATION

(11) **EP 4 509 021 A1**
(43) Date of publication of application: **19.02.2025**
(21) Application number: 24801067.0
(22) Date of filing: 19.06.2024
(51) Int. Cl.: A47J 31/44

(54) **BREWING DEVICE AND COFFEE MACHINE**

(30) Priority: 19.06.2023 CN 202310731119
(71) Applicant: Cino Technology (Shenzhen) Limited, Shenzhen, Guangdong 518104 (CN)
(72) Inventor: HE, Bo, Shenzhen, Guangdong 518104 (CN); MENG, Yaoqin, Shenzhen, Guangdong 518104 (CN)
(74) Representative: Ipside
(86) International application number: PCT/CN2024/100196
(87) International publication number: WO 2024/260383

(57) **Abstract**

Embodiments of the present application relate to the technical field of brewing equipment, and disclose a brewing device and a coffee machine. The brewing device comprises: a base; a capsule cup movably arranged on the base, the capsule cup being provided with an accommodating cavity, and an opening and a via communicated with the accommodating cavity, wherein the opening and the via are oppositely arranged; a driving assembly arranged on the base, the driving assembly being connected with the capsule cup and being configured to drive the capsule cup to move relative to the base; a push-out assembly arranged on the capsule cup, the push-out assembly comprising a push plate and a push rod, wherein the push plate is connected to a first end of the push rod and arranged in the accommodating cavity, and the push rod movably penetrates through the via and has a second end extending out of the accommodating cavity; a thrust piece arranged on the base, the thrust piece being configured to abut against the second end of the push rod to drive the push-out assembly to move relative to the capsule cup. By the above method, a brewed beverage capsule can be easily released from the brewing device.

## Description

### Technical Field

Embodiments of the present application relate to the technical field of brewing equipment, and more particularly, relate to a brewing device and a coffee machine.

### Background of the Invention

With the improvement of people's living standards, beverage brewing equipment, such as a coffee machine, which is convenient to use and can better improve the taste, has been widely popularized and applied. In the process of brewing coffee with the coffee machine, we need to put a coffee capsule filled with coffee brewing raw materials in the coffee machine, puncture the coffee capsule, and inject water of high temperature and high pressure for brewing, so as to obtain a coffee beverage. After brewing, the coffee capsule needs to be taken out of the coffee machine so that a new coffee capsule can be added for brewing.

In the process of implementing the embodiments of the present application, the inventors have found that although almost all existing coffee machines are equipped with structures for automatically scraping off coffee capsules, the coffee capsules are released from the coffee machines mainly by clamping or scraping heads of the coffee capsules (i.e., the punctured ends of the coffee capsules). The coffee capsule becomes soft after being brewed with water of high temperature and high pressure, so it often happens that the coffee capsule cannot be released by scraping the head thereof as described above.

### Summary of the Invention

The technical problem mainly to be solved by the embodiments of the present application is to provide a brewing device and a coffee machine, which can make a brewed capsule easily released from the brewing device.

In order to solve the above technical problem, a technical solution adopted by an embodiment of the present application is to provide a brewing device. The brewing device comprises a base, a capsule cup, a driving assembly, a push-out assembly and a thrust piece. The capsule cup is movably arranged on the base and is provided with an accommodating cavity, and an opening and a via communicated with the accommodating cavity, wherein the opening and the via are oppositely arranged. The driving assembly is arranged on the base and connected with the capsule cup, and the driving assembly is configured to drive the capsule cup to move relative to the base. The push-out assembly is arranged on the capsule cup and comprises a push plate and a push rod, wherein the push plate is connected to a first end of the push rod and arranged in the accommodating cavity, and the push rod movably penetrates through the via and has a second end extending out of the accommodating cavity. The thrust piece is arranged on the base and is configured to abut against a second end of the push rod so as to drive the push-out assembly to move relative to the capsule cup.

In some embodiments, the base is provided with a chute, and the capsule cup comprises a cup body and a sliding part, wherein the sliding part is connected to the cup body and arranged in the chute, and the sliding part is connected with the driving assembly.

In some embodiments, the driving assembly comprises a handle which is rotatably arranged on the base and a connecting rod component which connects the handle and the sliding part. When the handle is driven to rotate in a direction close to the base, the connecting rod component drives the sliding part to move so that the cup body slides in a first direction. When the handle is driven to rotate in a direction away from the base, the connecting rod component drives the sliding part to move so that the cup body slides in a second direction, wherein the first direction and the second direction are opposite to each other.

In some embodiments, the connecting rod component includes a first connecting rod, a second connecting rod and a third connecting rod, wherein a first end of the first connecting rod is rotatably arranged on the base, a first end of the second connecting rod is rotatably arranged on the sliding part, and a first end of the third connecting rod is rotatably arranged on the handle, and second ends of the first connecting rod, the second connecting rod and the third connecting rod are rotatably connected together. A first end of the thrust piece is arranged on the first connecting rod, a second end of the thrust piece is configured to abut against the second end of the push rod, and the thrust piece rotates synchronously with the first connecting rod.

In some embodiments, the second end of the thrust piece is provided with an arc surface.

In some embodiments, the push-out assembly further comprises a first limiting piece which is arranged on the push rod, and the first limiting piece is configured to limit a movement stroke of the push rod.

In some embodiments, the base is provided with a limiting part, the driving assembly further comprises a second limiting piece which is arranged on the connecting rod component, and the second limiting piece is configured to abut against the limiting part to limit a movement stroke of the connecting rod component.

In some embodiments, the brewing device further comprises a clamping hook assembly which is rotatably arranged on the base and provided with a clamping groove and an abutting part, wherein the clamping groove is configured to clamp a beverage capsule, and the abutting part is configured to abut against the capsule cup. When the capsule cup abuts against the abutting part and the clamping hook assembly is driven to rotate relative to the base, the beverage capsule is released from the clamping groove.

In some embodiments, the brewing device further comprises a resetting member which is connected with the clamping hook assembly and the base, and the resetting member is configured to drive the clamping hook assembly to return to its original position.

In order to solve the above technical problem, another technical solution adopted by an embodiment of the present application is to provide a coffee machine including the above brewing device.

The brewing device according to the embodiment of the present application comprises a base, a capsule cup, a driving assembly, a push-out assembly and a thrust piece, wherein the capsule cup is movably arranged on the base, the driving assembly is respectively connected with the base and the capsule cup and is configured to drive the capsule cup to move relative to the base, the push-out assembly is arranged on the capsule cup, the thrust piece is directly or indirectly arranged on the base and is configured to abut against the push-out assembly, so that the push-out assembly can push the beverage capsule out of the capsule cup from a tail of the beverage capsule, thereby completing the separation of the brewed beverage capsule from the capsule cup. By arranging the push-out assembly on the capsule cup and making at least part of the push-out assembly located inside the capsule cup, the beverage capsule can be pushed out of the capsule cup from the interior of the capsule cup. As compared to the practice of clamping or scraping the head of the beverage capsule in the prior art, the structure in the present application can effectively solve the problem that the brewed beverage capsule is difficult to be separated from the capsule cup because it is absorbed in the capsule cup. Moreover, by pushing the beverage capsule out of the accommodating cavity from the tail of the beverage capsule, the possibility of successfully separating the beverage capsule from the capsule cup is greatly improved. In addition, the volume of a part of the head of the beverage capsule which protrudes for clamping with the clamping hook assembly can be reduced, thereby making the beverage capsule more exquisite and saving the production cost.

### Brief Description of the Drawings

In order to explain the technical solutions in the specific embodiments of the present application more clearly, drawings needed in the description of the specific embodiments will be briefly introduced below. Throughout the drawings, like elements or parts are generally designated by like reference numerals. In the drawings, elements or parts are not necessarily drawn to actual scale.
FIG. 1 is a schematic view of a brewing device according to an embodiment of the present application.
FIG. 2 is an exploded view of the brewing device according to the embodiment of the present application.
FIG. 3 is a schematic view of a base in the brewing device according to the embodiment of the present application.
FIG. 4 is a cross-sectional view of a capsule cup and a push-out assembly in the brewing device according to the embodiment of the present application.
FIG. 5 is a cross-sectional view, taken from a perspective of A-A in FIG. 1, of the brewing device according to the embodiment of the present application.
FIG. 6 is a cross-sectional view, taken from another perspective of A-A in FIG. 1, of the brewing device according to the embodiment of the present application.
FIG. 7 is a cross-sectional view, taken from a perspective of A-A in FIG. 1, of a brewing device according to another embodiment of the present application.
FIG. 8 is a cross-sectional view taken along a line B-B in FIG. 1 when the beverage capsule is clamped with the clamping hook assembly in the brewing device according to the embodiment of the present application.
FIG. 9 is a cross-sectional view taken along the line B-B in FIG. 1 when the capsule cup pushes the beverage capsule to be punctured by the puncturing assembly in the brewing device according to the embodiment of the present application.
FIG. 10 is a cross-sectional view taken along the line B-B in FIG. 1 when the push-out assembly pushes the beverage capsule out of the capsule cup and the beverage capsule is blocked by the clamping hook assembly in the brewing device according to the embodiment of the present application.

### Detailed Description of Embodiments

In order to facilitate the understanding of the present application, the present application will be described in more detail with referring to the drawings and specific embodiments. It shall be noted that, when an element is referred to as being "fixed to" another element, it may be directly on the other element, or one or more intervening elements may be present therebetween. When an element is referred to as being "connected to" another element, it may be directly connected to the other element, or one or more intervening elements may be present therebetween. Orientations or positional relationships indicated by terms such as "upper", "lower", "inner", "outer", "vertical" and "horizontal" used in this specification are based on the drawings, and these terms are only for the convenience of describing the present application and simplifying the description and are not intended to indicate or imply that the devices or elements mentioned must have specific orientations or be constructed and operated in the specific orientations, and thus these terms should not be construed as limitation to the present application. In addition, terms such as "first", "second" are only used for descriptive purposes and should not be construed as indicating or implying relative importance.

Unless otherwise defined, all technical and scientific terms used in this specification have the same meaning as commonly understood by those skilled in the art to which the present application belongs. The terms used in the specification of the present application are only for the purpose of describing specific embodiments, and are not intended to limit the present application. The term "and/or" used in this specification includes any and all combinations of one or more of the associated listed items. In addition, technical features involved in different embodiments of the present application described below can be combined with each other as long as they do not conflict with each other.

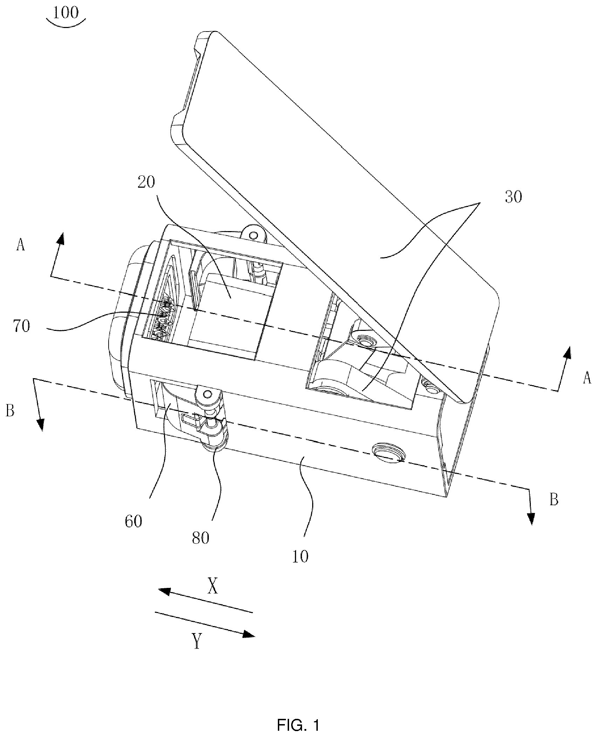

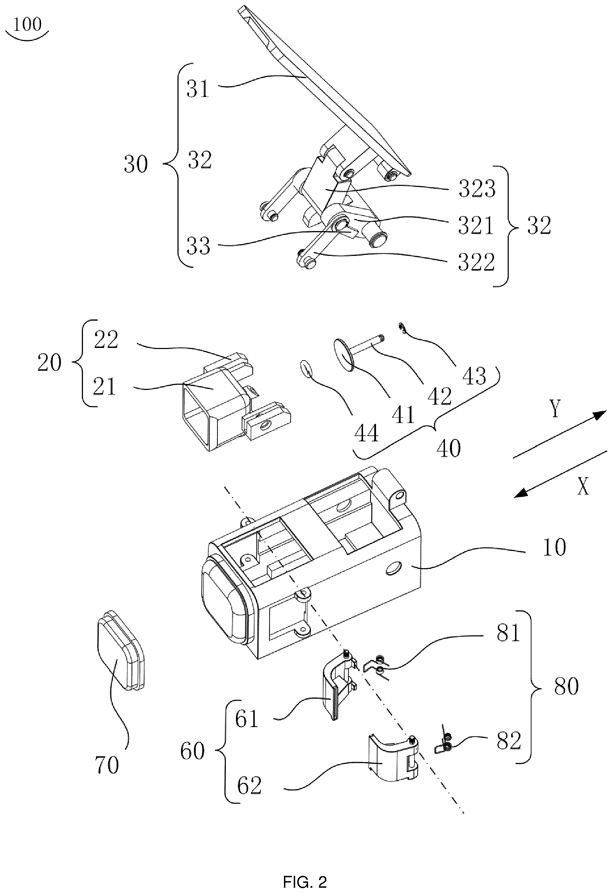

Referring to FIG. 1 and FIG. 2, a brewing device 100 comprises a base 10, a capsule cup 20, a driving assembly 30, a push-out assembly 40 and a thrust piece 50. The capsule cup 20 is movably arranged on the base 10 and is configured to accommodate a beverage capsule 200. The driving assembly 30 is movably arranged on the base 10 and is connected with the capsule cup 20 to drive the capsule cup 20 to move relative to the base 10. The push-out assembly 40 is arranged on the capsule cup 20 and is configured to abut against an end of the beverage capsule 200 accommodated in the capsule cup 20, and when the beverage capsule 200 needs to be separated from the capsule cup 20, the push-out assembly 40 pushes the beverage capsule 200 out of the capsule cup 20. The thrust piece 50 is arranged on the base 10 and is configured to abut against an end of the push-out assembly 40 to drive the push-out assembly 40 to move relative to the capsule cup 20, so that the beverage capsule 200 is separated from the capsule cup 20. By the arrangement of the push-out assembly 40 on the capsule cup 20 and the arrangement of the thrust piece 50 abutting against the moving push-out assembly 40, the brewed beverage capsule 200 can be pushed out of the capsule cup 20 from the interior of the capsule cup 20 by the push-out assembly 40, and then the beverage capsule 200 is smoothly separated from the capsule cup 20 and released from the brewing device 100.

In some embodiments, still referring to FIG. 1 and FIG. 2, the brewing device 100 further comprises a clamping hook assembly 60 which is rotatably arranged on the base 10 and a puncturing assembly 70 which is arranged on the side wall at an end of the base 10. The clamping hook assembly 60 is configured to clamp the non-brewed beverage capsule 200, so that when the driving assembly 30 drives the capsule cup 20 to move in the first direction X, the non-brewed beverage capsule 200 gradually enters into the capsule cup 20. Furthermore, the capsule cup 20 continues to push the clamping hook assembly 60 to rotate relative to the base 10, so that the non-brewed beverage capsule 200 continues to move with the capsule cup 20 in the first direction X after being released from the clamping hook assembly 60, until the beverage capsule 200 is punctured by the puncturing assembly 70 for brewing. After the brewing, the driving assembly 30 drives the capsule cup 20 and the brewed beverage capsule 200 to move synchronously in the second direction Y, until the thrust piece 50 abuts against the push-out assembly 40 so that the push-out assembly 40 pushes the brewed beverage capsule 200 out of the capsule cup 20. During the movement of the capsule cup 20 in the second direction Y, the clamping hook assembly 60 returns to its original position, so that the beverage capsule 200 pushed out is clamped with the clamping hook assembly 60 until the brewed beverage capsule 200 leaves the capsule cup 20 completely, then the beverage capsule 200 falls from the bottom of the base 10 under the action of its own gravity and is smoothly separated from the brewing device 100. The first direction X and the second direction Y are opposite to each other.

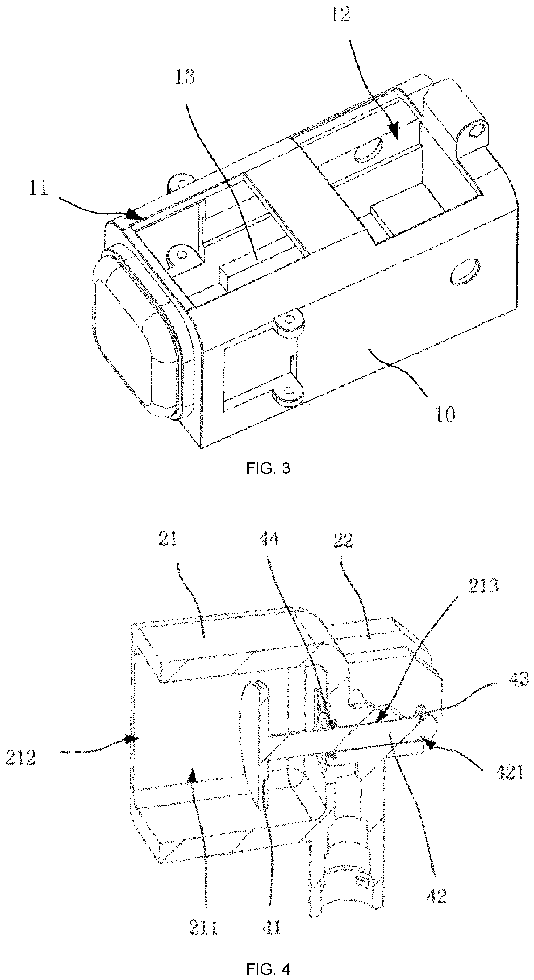

Referring to FIG. 3, the base 10 mentioned above is provided with a placing port 11, a chute 12 and a limiting part 13. The placing port 11 is arranged at the top of the base 10, through which the non-brewed beverage capsule 200 is placed into the base 10 to be clamped with the clamping hook assembly 60. The chute 12 is arranged on an inner surface of a side wall of the base 10, and the chute 12 extends in the first direction X and is configured to support and guide the movement of the capsule cup 20 inside the base 10. The limiting part 13 is arranged on a side wall of the base 10 and is configured to limit the movement of the driving assembly 30 relative to the base 10, so as to prevent the driving assembly 30 from being stuck during the movement.

Referring to FIG. 4, the capsule cup 20 mentioned above comprises a cup body 21 and a sliding part 22 connected to the outside of the cup body 21, and the sliding part 22 is arranged in the chute 12 of the base 10 and may be driven by the driving assembly 30 to reciprocate in the first direction X and the second direction Y. As shall be appreciated, in some embodiments, inner surfaces of two opposite side walls of the base 10 are both provided with chutes 12, two said sliding parts 22 are provided, and the two sliding parts 22 are symmetrically arranged on both sides of the cup body 21 in the first direction X, wherein one of the sliding parts 22 is arranged in one of the chutes 12 and the other sliding part 22 is arranged in the other chute 12. Through the arrangement of the two sliding parts 22 in correspondence with the two chutes 12, the movement of the cup body 21 can be more balanced, and the probability of the cup body 21 being stuck during the movement can be greatly reduced.

Still referring to FIG. 4, the cup body 21 is provided with an accommodating cavity 211, and an opening 212 and a via 213 communicated with the accommodating cavity 211, wherein the opening 212 through which the beverage capsule 200 enters or exits the accommodating cavity 211 and the via 213 through which the push-out assembly 40 penetrates are oppositely arranged at two ends of the cup body 21 in the first direction X. With such arrangement, part of the push-out assembly 40 is located inside the accommodating cavity 211 so that the beverage capsule 200 can be pushed out of the accommodating cavity 211 by the push-out assembly 40 from the interior of the accommodating cavity 211, thereby greatly improving the probability of successfully separating the beverage capsule 200 from the cup body 21.

Referring to FIG. 2, the driving assembly 30 mentioned above comprises a handle 31 and a connecting rod component 32. One end of the handle 31 is rotatably arranged on the base 10, and the connecting rod component 32 is respectively connected with the sliding part 22 of the capsule cup 20 and the handle 31, so that when an external force is applied to drive the handle 31 to rotate relative to the base 10, the handle 31 can drive the cup body 21 of the capsule cup 20 to slide relative to the base 10 through the connecting rod component 32. Specifically, when the handle 31 is driven to rotate in a direction close to the base 10, the connecting rod component 32 drives the sliding part 22 to move so that the cup body 21 slides in the first direction X; and when the handle 31 is driven to rotate in a direction away from the base 10, the connecting rod component 32 drives the sliding part 22 to move so that the cup body 21 slides in the second direction Y, wherein the first direction X and the second direction Y are opposite to each other.

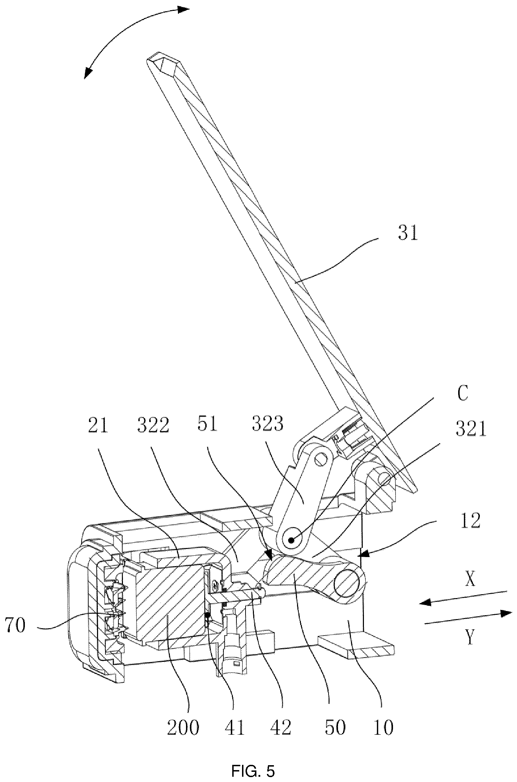

Referring to FIG. 5, in some embodiments, the connecting rod component 32 includes a first connecting rod 321, a second connecting rod 322 and a third connecting rod 323. A first end of the first connecting rod 321 is rotatably arranged on the base 10, a first end of the second connecting rod 322 is rotatably arranged on the sliding part 22, and a first end of the third connecting rod 323 is rotatably arranged on the handle 31. Second ends of the first connecting rod 321, the second connecting rod 322 and the third connecting rod 323 are rotatably connected together to form a hinge point C.

Specifically, when the handle 31 is driven to rotate in the direction away from the base 10 (a clockwise direction in FIG. 5), it drives the third connecting rod 323 to move, and the hinge point C moves in a direction away from the chute 12. At this point, because the first end of the first connecting rod 321 can only rotate relative to the base 10 but cannot move, the first end of the second connecting rod 322 moves in a direction close to the first end of the first connecting rod 321 under the action of the third connecting rod 323 and the chute 12, so as to drive the cup body 21 to move in the second direction Y. At this time, a space is available between the cup body 21 and the puncturing assembly 70 for accommodating the non-brewed beverage capsule 200. When the handle 31 is driven to rotate in the direction close to the base 10 (a counterclockwise direction in FIG. 5), it pushes the third connecting rod 323 to move, and the hinge point C moves in a direction close to the chute 12. At this point, because the first end of the first connecting rod 321 can only rotate relative to the base 10 but cannot move, the first end of the second connecting rod 322 moves in a direction away from the first end of the first connecting rod 321 under the action of the third connecting rod 323 and the chute 12, so as to push the cup body 21 to move in the first direction X. Thus, the non-brewed beverage capsule 200 enters into the accommodating cavity 211 of the cup body 21 until the beverage capsule 200 is punctured by the puncturing assembly 70 for brewing.

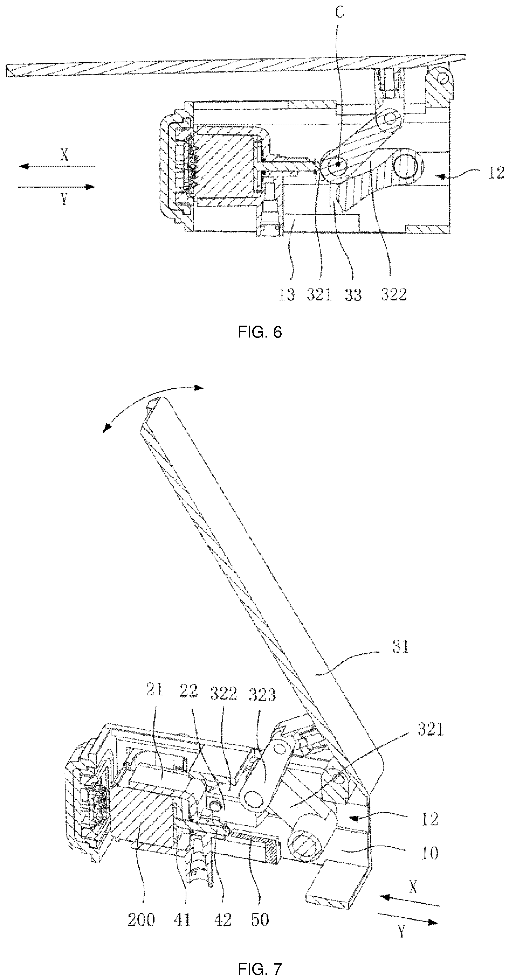

Referring to FIG. 2 and FIG. 6, in some embodiments, the driving assembly 30 further comprises a second limiting piece 33 arranged on the first connecting rod 321 or the second connecting rod 322 in the connecting rod component 32, and the first limiting piece 43 is configured to abut against the limiting part 13 on the base 10 to limit movement strokes of the first connecting rod 321 and the second connecting rod 322 in the connecting rod component 32. Specifically, if the limiting part 13 or the first limiting piece 43 is not provided, then when the hinge point C moves to the position shown in FIG. 6, the second end of the first connecting rod 321 continues to rotate in the counterclockwise direction and the second end of the second connecting rod 322 continues to rotate in the clockwise direction without the restriction from the limiting structure. That is, the first connecting rod 321 and the second connecting rod 322 are in a V-shaped structure from the perspective of FIG. 6, and then the capsule cup 20 moves in the second direction Y, which causes liquid leakage from the beverage capsule 200 in the brewing process.

Referring to FIG. 4, the push-out assembly 40 comprises a push plate 41 and a push rod 42. The push plate 41 is connected to a first end of the push rod 42 and is located in the accommodating cavity 211 of the cup body 21, and the diameter of the push plate 41 is larger than that of the push rod 42 and is also larger than that of the via 213. The push rod 42 penetrates through the via 213 and has a second end extending out of the accommodating cavity 211, and the push rod 42 can reciprocate in the via 213 in the first direction X and the second direction Y.

Referring to FIG. 6, in some embodiments, the push-out assembly 40 further includes a first limiting piece 43. The first limiting piece 43 is arranged on the push rod 42, and the first limiting piece 43 is always located outside the accommodating cavity 211 of the cup body 21 during extension and contraction movements of the push rod 42 relative to the cup body 21. The first limiting piece 43 is configured to abut against the cup body 21, so as to prevent the push rod 42 from completely entering into the accommodating cavity 211, i.e., to prevent the push rod 42 from falling off from the via 213, which otherwise would cause failure of the push-out assembly 40. As an example, the first limiting piece 43 may be a blocking piece, an outer surface close to the second end of the push rod 42 is provided with an annular groove 421, and the blocking piece is clamped in the annular groove 421 to be fixed relative to the push rod 42. As shall be appreciated, in other embodiments, in order to improve the sealing performance at the joint between the push rod 42 and the via 213 to prevent the beverage from leaking out of the cup body 21 from the via 213 during the brewing of the beverage capsule 200, the push-out assembly 40 may further comprise a sealing member 44 arranged at the via 213, and the push rod 42 pass through the middle of the sealing member 44, so that the space between the via 213 and the push rod 42 can be sealed. The sealing member 44 may be a rubber ring or the like.

The thrust piece 50 mentioned above is arranged on the base 10 and is configured to abut against the second end of the push rod 42 to drive the push rod 42 to move relative to the cup body 21, so that the brewed beverage capsule 200 inside the accommodating cavity 211 of the cup body 21 is pushed out of the accommodating cavity 211, thereby separating the brewed beverage capsule 200 from the cup body 21.

As shall be appreciated, the thrust piece 50 being arranged on the base 10 as described in the present application should be construed as the thrust piece 50 being directly arranged on the base 10, or being indirectly arranged on the base 10 through other components, such as the driving assembly 30.

Referring to FIG. 7, the thrust piece 50 is directly arranged on the base 10. Specifically, the thrust piece 50 is arranged at the bottom of the base 10 and the thrust piece 50 at least has an extension that can abut against the second end of the push rod 42. In this way, when the driving assembly 30 drives the cup body 21 and the push rod 42 to move synchronously in the second direction Y, if the second end of the push rod 42 abuts against the thrust piece 50, then the push rod 42 is blocked by the thrust piece 50 to keep stationary relative to the base 10 while the cup body 21 continues to move relative to the base 10 in the second direction Y. That is, there is a relative movement between the cup body 21 and the push rod 42, and the push rod 42 can push the beverage capsule 200 inside the accommodating cavity 211 out of the accommodating cavity 211. When the driving assembly 30 drives the cup body 21 to move in the first direction X, the thrust piece 50 does not restrict the movement of the push rod 42 in the first direction X, so the push rod 42 can move synchronously with the cup body 21 in the first direction X until the non-brewed beverage capsule 200 enters into the accommodating cavity 211, and the push plate 41 and the push rod 42 are pushed to move until the push plate 41 abuts against the bottom of the accommodating cavity 211.

Referring to FIG. 5, the thrust piece 50 is indirectly arranged on the base 10 through the driving assembly 30. Specifically, a first end of the thrust piece 50 is arranged on the first connecting rod 321, and a second end of the thrust piece 50, which is a free end, is configured to abut against the push rod 42 to push the push rod 42 to move relative to the cup body 21. The thrust piece 50 rotates synchronously with the first connecting rod 321, so that the driving assembly 30 can also drive the push rod 42 to move relative to the cup body 21 while driving the cup body 21 to move, so that the beverage capsule 200 is released from the accommodating cavity 211. When the handle 31 is driven to rotate in the direction away from the base 10 (the clockwise direction in FIG. 5), the first connecting rod 321 and the thrust piece 50 rotate synchronously relative to the base 10 (in the clockwise direction in FIG. 5) until the second end of the push rod 42 abuts against the second end of the thrust piece 50; and then the thrust piece 50 continues to rotate, the push rod 42 moves relative to the cup body 21 under the blocking of the thrust piece 50, so that the push plate 41 pushes the beverage capsule 200 out of the accommodating cavity 211. When the handle 31 is driven to rotate in the direction close to the base 10 (the counterclockwise direction in FIG. 5), the first connecting rod 321 and the thrust piece 50 rotate synchronously relative to the base 10 (in the counterclockwise direction in FIG. 5). Since the push plate 41 is not located at the bottom of the accommodating cavity 211, i.e., the push rod 42 is at least partially retracted into the accommodating cavity 211, there is a sufficient distance between the second end of the push rod 42 and the second end of the thrust piece 50. That is, the thrust piece 50 does not abut against the push rod 42 during the whole process of the rotation of the thrust piece 50 in the counterclockwise direction.

Referring to FIG. 5, to enable the second end of the thrust piece 50 to better abut against the second end of the push rod 42, the second end of the thrust piece 50 has an arc surface 51, and/or the second end of the push rod 42 has a hemispherical shape. As shall be appreciated, the thrust piece 50 and the first connecting rod 321 may be two independent parts connected by bonding, welding, clamping, screwing or the like, or the thrust piece 50 and the first connecting rod 321 may be integrally formed.

Referring to FIG. 1 and FIG. 2, the clamping hook assembly 60 is rotatably arranged on the base 10 and is provided with a clamping groove and an abutting part, wherein the clamping groove is configured to clamp the beverage capsule 200, and the abutting part is configured to abut against the capsule cup 20. When the capsule cup 20 abuts against the abutting part and the clamping hook assembly 60 is driven to rotate relative to the base 10, the beverage capsule 200 is released from the clamping groove.

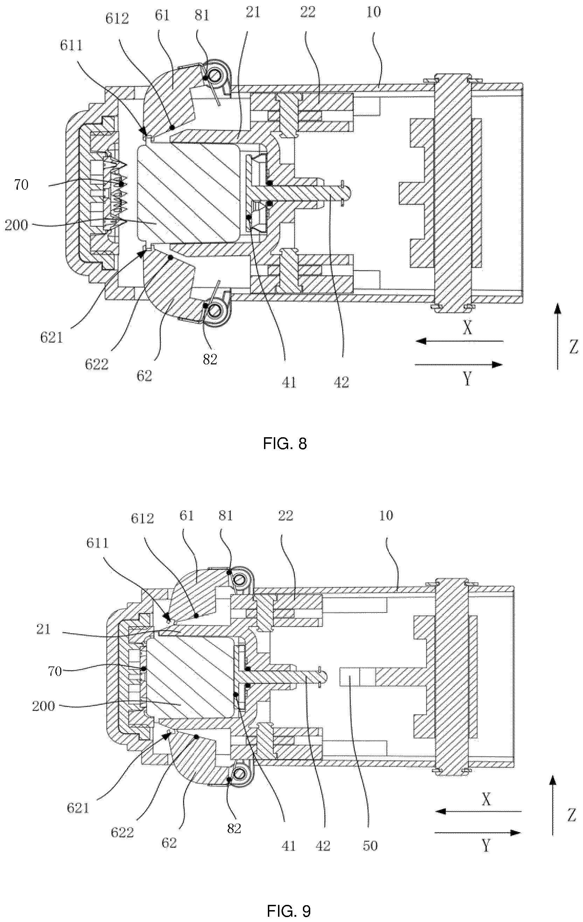

Referring to FIG. 8, specifically, the clamping hook assembly 60 comprises a first clamping hook 61 and a second clamping hook 62, which are respectively arranged on both sides of the base 10 in the first direction X. A first end of the first clamping hook 61 is rotatably arranged on a side wall of the base 10, and a second end of the first clamping hook 61 is provided with a first clamping groove 611, wherein a top end of the first clamping groove 611 penetrates to the outside and a bottom end of the first clamping groove 611 is a blind groove. A first end of the second clamping hook 62 is rotatably arranged on another side wall of the base 10, and a second end of the second clamping hook 62 is provided with a second clamping groove 621, wherein a top end of the second clamping groove 621 penetrates to the outside and a bottom end of the second clamping groove 621 is a blind groove. The first clamping groove 611 and the second clamping groove 621 are configured to clamp and connect with the head of the non-brewed beverage capsule 200 which enters into the base 10 from the top of the base 10 through the placing port 11, so that the non-brewed beverage capsule 200 is fixed.

Referring to FIG. 9, the first clamping hook 61 is further provided with a first abutting part 612, which is located at one end of the first clamping hook 61 that is close to the first clamping groove 611. The second clamping hook 62 is further provided with a second abutting part 622, which is located at one end of the second clamping hook 62 that is close to the second clamping groove 621. A distance between the first abutting part 612 and the second abutting part 622 gradually decreases in the first direction X, and at least part of the distance is smaller than the width of the cup body 21 in a third direction Z, which is perpendicular to the first direction X. The first abutting part 612 and the second abutting part 622 are both configured to abut against the end of the cup body 21 provided with the opening 212, so that when the cup body 21 moves in the first direction X, the cup body 21 respectively pushes the first clamping hook 61 and the second clamping hook 62 to rotate relative to the base 10, and the second end of the first clamping hook 61 and the second end of the second clamping hook 62 move away from each other, and thus the head of the non-brewed beverage capsule 200 is released from the first clamping groove 611 and the second clamping groove 621. Since the tail and the middle parts of the non-brewed beverage capsule 200 have entered into the accommodating cavity 211 of the cup body 21 at this point, the beverage capsule 200 will not fall out of the brewing device 100 but moves with the cup body 21 in the first direction X until it is punctured by the puncturing assembly 70. At the same time, the push plate 41 and the push rod 42 are squeezed by the capsule to move to the bottom inside the accommodating cavity 211 of the cup body 21 in the second direction Y, thereby completing the brewing of the beverage.

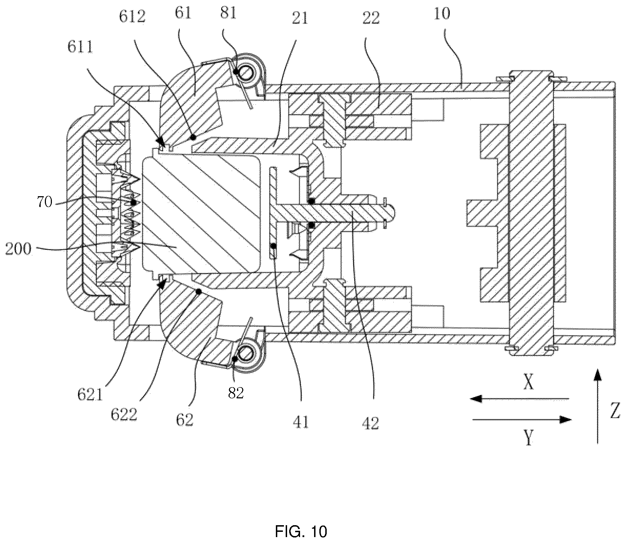

Referring to FIG. 10, after the brewing of the beverage capsule 200 is completed, the driving assembly 30 drives the cup body 21 to move in the second direction Y. Because the beverage capsule 200 brewed with hot water at high temperature and high pressure is easily adsorbed in the accommodating cavity 211 of the cup body 21, the brewed beverage capsule 200 can move in the second direction Y synchronously with the cup body 21 until the second end of the push rod 42 abuts against the second end of the thrust piece 50. At this time, because the cup body 21 continues to move in the second direction Y while the push rod 42 cannot continue to move in the second direction Y, there is a relative movement between the push rod 42 and the cup body 21, and the push plate 41 at least partially pushes the beverage capsule 200 out of the accommodating cavity 211 from the tail of the beverage capsule 200. As the cup body 21 continues to move, the first clamping hook 61 and the second clamping hook 62 gradually move towards each other until the end of the cup body 21 no longer abut against the first abutting part 612 and the second abutting part 622. As the thrust piece 50 and the first connecting rod 321 rotate in the clockwise direction in FIG. 5, the second end of the thrust piece 50 no longer abuts against the second end of the push rod 42, so that the beverage capsule 200 moves in the second direction Y synchronously with the cup body 21 again until the head of the beverage capsule 200 abuts against the second end of the first clamping hook 61 and the second end of the second clamping hook 62, and then the cup body 21 continues to move. When the beverage capsule 200 is completely released from the accommodating cavity 211, the beverage capsule 200 falls from the bottom of the base 10 under the action of its own gravity, thereby completing the separation of the beverage capsule 200 from the cup body 21.

As shall be appreciated, in the case where the thrust piece 50 is directly arranged on the base 10, after the second end of the push rod 42 abuts against the thrust piece 50, the cup body 21 continues to move in the second direction Y, while the push rod 42 and the thrust piece 50 keep abutting against each other, as shown in FIG. 7, until the push plate 41 completely pushes the beverage capsule 200 out of the accommodating cavity 211, and then the beverage capsule 200 falls from the bottom of the base 10 under the action of its own gravity, thereby completing the separation of the beverage capsule 200 from the cup body 21.

Referring to FIG. 8 to FIG. 10, the brewing device 100 further comprises a resetting member 80, the resetting member 80 is respectively connected with the clamping hook assembly 60 and the base 10 and is configured to drive the clamping hook assembly 60 to return to its original position. As an example, the resetting member 80 includes a first elastic member 81 and a second elastic member 82, wherein the first elastic member 81 is respectively connected with the first clamping hook 61 and the base 10 and is configured to drive the second end of the first clamping hook 61 to rotate toward the inside of the base 10. The second elastic member 82 is respectively connected with the second clamping hook 62 and the base 10, and is configured to drive the second end of the second clamping hook 62 to rotate toward the inside of the base 10. That is, the first clamping hook 61 and the second clamping hook 62 tend to move towards each other under the action of the first elastic member 81 and the second elastic member 82. Of course, the first clamping hook 61 and the second clamping hook 62 are both provided with corresponding limiting structures to limit rotation strokes of the first clamping hook 61 and the second clamping hook 62, so as to ensure that a proper distance is available between the first clamping groove 611 and the second clamping groove 621 for clamping the head of the beverage capsule 200.

The present application further provides an embodiment of a coffee machine comprising the brewing device 100, reference may be made to the above embodiments for the structures and functions of the brewing device 100, and thus this will not be further described herein.

The brewing device 100 according to the embodiment of the present application comprises a base 10, a capsule cup 20, a driving assembly 30, a push-out assembly 40 and a thrust piece 50, wherein the capsule cup 20 is movably arranged on the base 10, the driving assembly 30 is respectively connected with the base 10 and the capsule cup 20 and is configured to drive the capsule cup 20 to move relative to the base 10; the push-out assembly 40 is arranged on the capsule cup 20, the thrust piece 50 is directly or indirectly arranged on the base 10 and is configured to abut against the push-out assembly 40, so that the push-out assembly 40 can push the beverage capsule 200 out of the capsule cup 20 from the tail of the beverage capsule 200, thereby completing the separation of the brewed beverage capsule 200 from the capsule cup 20. By arranging the push-out assembly 40 arranged on the capsule cup 20 and making at least part of the push-out assembly 40 located inside the capsule cup 20, the beverage capsule 200 can be pushed out of the capsule cup 20 from the interior of the capsule cup 20. As compared to the practice of clamping or scraping the head of the beverage capsule 200 in the prior art, the structure in the present application can effectively solve the problem that the brewed beverage capsule 200 is difficult to be separated from the capsule cup 20 because it is absorbed in the capsule cup 20. Moreover, by pushing the beverage capsule 200 out of the accommodating cavity 211 at the tail of the beverage capsule 200, the possibility of successfully separating the beverage capsule 200 from the capsule cup 20 is greatly improved. In addition, the volume of a part of the head of the beverage capsule 200 which protrudes for clamping with the clamping hook assembly 60 can be reduced, thereby making the beverage capsule 200 more exquisite and saving the production cost.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A brewing device, being **characterized in that**, comprising:
a base;
a capsule cup movably arranged on the base, the capsule cup being provided with an accommodating cavity, and an opening and a via communicated with the accommodating cavity, wherein the opening and the via are oppositely arranged;
a driving assembly arranged on the base, the driving assembly being connected with the capsule cup and being configured to drive the capsule cup to move relative to the base;
a push-out assembly arranged on the capsule cup, the push-out assembly comprising a push plate and a push rod, wherein the push plate is connected to a first end of the push rod and arranged in the accommodating cavity, and the push rod movably penetrates through the via and has a second end extending out of the accommodating cavity;
a thrust piece arranged on the base, the thrust piece being configured to abut against the second end of the push rod to drive the push-out assembly to move relative to the capsule cup.

2. The brewing device according to Claim 1, being **characterized in that**,
the base is provided with a chute, and the capsule cup comprises a cup body and a sliding part, wherein the sliding part is connected to the cup body and arranged in the chute, and the sliding part is connected with the driving assembly.

3. The brewing device according to Claim 2, being **characterized in that**,
the driving assembly comprises a handle which is rotatably arranged on the base and a connecting rod component which connects the handle and the sliding part; when the handle is driven to rotate in a direction close to the base, the connecting rod component drives the sliding part to move so that the cup body slides in a first direction; and when the handle is driven to rotate in a direction away from the base, the connecting rod component drives the sliding part to move so that the cup body slides in a second direction, wherein the first direction and the second direction are opposite to each other.

4. The brewing device according to Claim 3, being **characterized in that**,
the connecting rod component comprises a first connecting rod, a second connecting rod and a third connecting rod, wherein a first end of the first connecting rod is rotatably arranged on the base, a first end of the second connecting rod is rotatably arranged on the sliding part, and a first end of the third connecting rod is rotatably arranged on the handle; and second ends of the first connecting rod, the second connecting rod and the third connecting rod are rotatably connected together;
a first end of the thrust piece is arranged on the first connecting rod, a second end of the thrust piece is configured to abut against the second end of the push rod, and the thrust piece rotates synchronously with the first connecting rod.

5. The brewing device according to Claim 4, being **characterized in that**,
the second end of the thrust piece is provided with an arc surface.

6. The brewing device according to Claim 3, being **characterized in that**,
the push-out assembly further comprises a first limiting piece which is arranged on the push rod, and the first limiting piece is configured to limit a movement stroke of the push rod.

7. The brewing device according to Claim 3, being **characterized in that**,
the base is provided with a limiting part, the driving assembly further comprises a second limiting piece which is arranged on the connecting rod component, and the second limiting piece is configured to abut against the limiting part to limit a movement stroke of the connecting rod component.

8. The brewing device according to any of Claims 1 to 5, being **characterized in that**, the brewing device further comprises a clamping hook assembly which is rotatably arranged on the base and provided with a clamping groove and an abutting part, wherein the clamping groove is configured to clamp a beverage capsule, and the abutting part is configured to abut against the capsule cup;
when the capsule cup abuts against the abutting part and the clamping hook assembly is driven to rotate relative to the base, the beverage capsule is released from the clamping groove.

9. The brewing device according to Claim 8, being **characterized in that**,
the brewing device further comprises a resetting member which is connected with the clamping hook assembly and the base, and the resetting member is configured to drive the clamping hook assembly to return to its original position.

10. A coffee machine, being **characterized in that**, comprising the brewing device according to any of Claims 1 to 9.
